**Europäisches Patentamt**

**European Patent Office**

**Office européen des brevets**

(19)

(11) Veröffentlichungsnummer: **0 228 633**
**B1**

(12) EUROPÄISCHE PATENTSCHRIFT

(45) Veröffentlichungstag der Patentschrift:
**19.04.89**

(21) Anmeldenummer: **86117305.2**

(22) Anmeldetag: **12.12.86**

(51) Int. Cl.⁴: **B01J 2/16,** B01J 2/14, B01J 8/38

(54) Vorrichtung zum Herstellen und/oder Bearbeiten von Granulaten.

(30) Priorität: **30.12.85  CH 5550/85**

(43) Veröffentlichungstag der Anmeldung:
**15.07.87 Patentblatt 87/29**

(45) Bekanntmachung des Hinweises auf die Patenterteilung:
**19.04.89 Patentblatt 89/16**

(84) Benannte Vertragsstaaten:
**AT BE CH DE ES FR GB IT LI NL SE**

(56) Entgegenhaltungen:
**DE-A- 3 107 959**

(73) Patentinhaber: **Aeromatic AG, Hauptstrasse 145,
CH-4416 Bubendorf(CH)**

(72) Erfinder: **Külling, Walter, Wildensteinerstrasse 26,
CH-4416 Bubendorf(CH)**

(74) Vertreter: **Eschmann, Heinz et al, A. Braun, Braun,
Héritier, Eschmann AG Patentanwälte
Holbeinstrasse 36-38, CH-4051 Basel(CH)**

**Beschreibung**

Die vorliegende Erfindung betrifft eine Vorrichtung gemäss Oberbegriff des Patentanspruches 1.

Zur Herstellung und Bearbeitung von Granulaten sind verschiedene Arbeitsgänge erforderlich. Ein hierfür häufig eingesetztes Gerät ist die sogenannte Wirbelschichtapparatur, wie sie beispielsweise in der DE-A 2 738 485 beschrieben ist. Bei dieser befindet sich am unteren Ende eines mit einem Siebboden versehenen Wirbelschichtbehälters eine horizontale Rotorscheibe. Unter dem Siebboden befindet sich eine Windkammer. Um die Apparatur auf verschiedenartige Granulate anpassen zu können, kann gemäss DE-B 2 805 397 der untere die Rotorscheibe umgebende Teil des Behälters konisch ausgebildet werden und die Rotorscheibe höhenverstellbar sein. Auf diese Weise kann der Ringspalt zwischen der Rotorscheibe und der sie umgebenden zylindrischen Wand des Wirbelschichtbehälters verändert und somit die Stärke des Luftstromes eingestellt werden.

Apparaturen, der eben erwähnten Art haben verschiedene Nachteile. Um den Spalt zwischen Behälterwand und Rotorscheibe präzise regeln zu können sind die Anforderungen an die Behältergeometrie – insbesondere im unteren, konisch ausgebildeten Teil sehr hoch zu stellen. Aber auch beim praktischen Einsatz eines solchen Gerätes bieten sich Probleme. Die mit einer solchen Apparatur erzeugte umwälzende Bewegung der Feststoffe, welche nachstehend als Kreiskranzbewegung bezeichnet wird, ist wichtig für eine gute Durchmischung und gleichmässige Bearbeitung der Granulate. Sie wird im wesentlichen durch die von der Rotorscheibe auf die Granulate ausgeübten Zentrifugalkräfte erzeugt. Soll nun beispielsweise die Trocknungsleistung erhöht werden, so kann der durch das Wirbelbett strömende Luftstrom nicht beliebig verstärkt werden, da ab einer gewissen Luftstromstärke die Kreiskranzbewegung gestört wird und eine gleichmässige Trocknung nicht mehr erzielt werden kann.

Da insbesondere beim Coating-Prozess zwecks Abtrocknung ein kräftiger Luftstrom benützt wird, ist eine Pulverzuführung oder eine nach dem Ultraschallprinzip erfolgende Vernebelung von Sprühflüssigkeiten erschwert bis verunmöglicht, weil Feinstaub und Sprühnebel vom Luftstrom weggetragen werden und somit dem Produkt nicht mehr zur Verfügung stehen.

Die Erfindung, wie sie in den Ansprüchen gekennzeichnet ist, löst die Aufgabe, mit möglichst einfachen Mitteln eine Vorrichtung zu schaffen, welche die obengenannten Nachteile nicht aufweist.

Nachstehend wird die Erfindung anhand einer Zeichnung beispielsweise näher erläutert. Es zeigen:

Fig. 1 eine erfindungsgemässe Vorrichtung in schematischer Darstellung;
Fig. 2 eine diesbezügliche Ausführungsvariante, und
Fig. 3 ein Detailausschnitt zu Fig. 2.

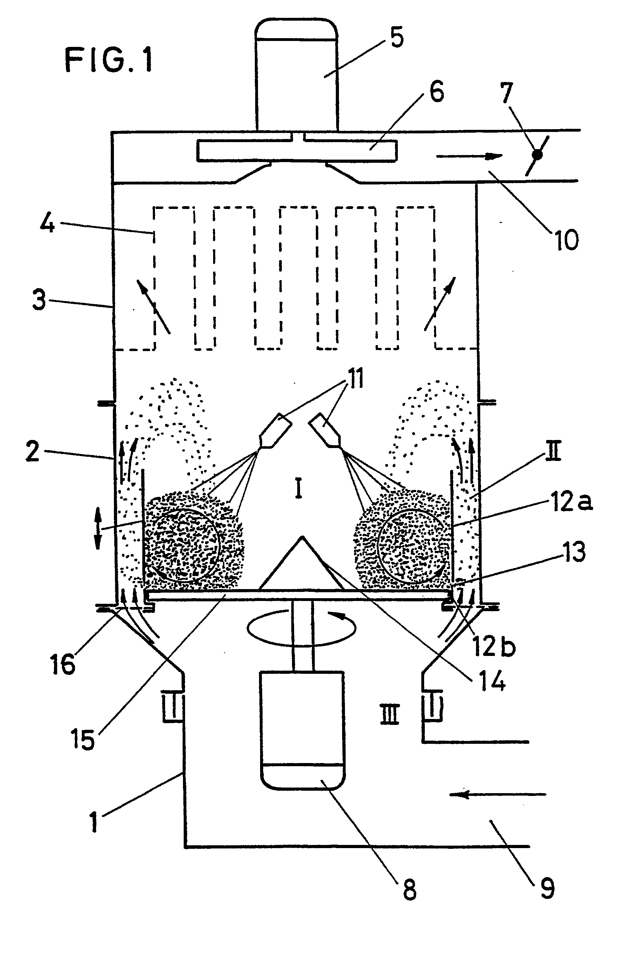

Das Gehäuse der in Fig. 1 gezeigten Ausführungsvarianten einer erfindungsgemässen Vorrichtung besteht aus einem Sockel 1, einem Bearbeitungsgehäuse 2 und einem Filtergehäuse 3. Im Bearbeitungsgehäuse 2 befindet sich eine annähernd zylindrisch angeordnete Wandung 12, welche in ihrem unteren Bereich eine Rotorscheibe 15 umschliesst. Zwischen dem Bearbeitungsgehäuse 2 und dem unteren Rand der Wandung 12 befindet sich ein luftdurchlässiger Boden 16. Oben auf der Rotorscheibe 15 ist in der Mitte ein Zentrumskegel 14 vorgesehen. Die Rotorscheibe 15 wird von einem Rotorantrieb 8 in Drehung versetzt.

Der oberhalb der Rotorscheibe 15 innerhalb der Wandung 12 befindliche Raum wird als zentraler Bearbeitungsraum I bezeichnet. Der zwischen der Wand des Bearbeitungsgehäuses 2 und der Wandung 12 gelegene ringförmige Raum wird als Bearbeitungsraum II bezeichnet. Im Sockel befindet sich der Sockelraum III. Im zentralen Raum I sind eine oder mehrere Sprühdüsen 11 angeordnet.

Das Filtergehäuse 3 ist in seinem Innern mit einem Filter 4 versehen. Im oberen Bereich des Filtergehäuses 3 ist ein von einem Ventilatormotor 5 angetriebener Ventilator 6 vorgesehen, welcher die Luft, welche durch den unten am Sockel 1 vorhandenen Zuluftkanal 9 in das Gehäuse 1, 2, 3 einströmt, durch einen Abluftkanal 10 wieder ausströmen lässt. Es wäre auch denkbar einen zur Erzeugung von Treibluft dienenden Ventilator im Zuluftkanal 9 anzuordnen. Der Abluftkanal 10 kann mit einer Luftregelklappe 7 versehen sein.

Die erfindungsgemässe Vorrichtung wird wie folgt betrieben:

Die zu bearbeitenden Substanzen werden in den zentralen Bearbeitungsraum I gegeben. Je nach Bearbeitungsschritt wird die Rotorscheibe 15 vor, während oder nach dem Einfüllvorgang in Rotation versetzt. Durch die infolge der Drehbewegung der Rotorscheibe 15 enstehenden, auf die Substanzen einwirkenden Zentrifugalkräfte werden diese gegen die Wandung 12 geschleudert. Durch diese Schleuderbewegung und durch die Einwirkung nachfolgender Substanzen wird eine Kreiskranzbewegung aufgebaut. Mit anderen Worten werden die Substanzen in der durch die Wandung 12 und die Rotorscheibe 15 gebildeten Ecke in eine kreisförmige Bewegung versetzt, wie dies in der Figur durch Punkteballungen dargestellt ist. Dreidimensional gesehen bewegen sich die Partikel innerhalb eines Torus und bilden somit einen Kranz.

In der Mitte der Rotorscheibe 15 sind die Zentrifugalkräfte am geringsten, so dass die Gefahr besteht, dass dort Substanzen liegen bleiben, womit eine gleichmässige Durchmischung nicht mehr gewährleistet wäre. Deshalb empfiehlt sich der Aufsatz eines Zentrumkegels 14 auf die Rotorscheibe 15, an dessen steilen Seitenwänden die Substanzen durch ihr Gewicht nach unten aussen in den Bereich stärkerer Zentrifugalkräfte gelangen. Es besteht selbstverständlich auch die Möglichkeit, anstelle der Verwendung eines aufsetzbaren Kegels 14 die Rotorscheibe 15 entsprechend konisch auszuformen. Hierbei kann die konische Form je nach Bedarf mehr oder weniger ausgeprägt sein.

Ferner kann eine leicht konkave Oberflächenformgebung von Vorteil sein, da beispielsweise ein nach oben gewölbter Rand der Rotorscheibe 15 den Aufbau einer Kreiskranzbewegung der Granulate fördern kann. Die Formgebung hängt von verschiedenen Substanz- und Bearbeitungsspezifischen Parametern ab, so dass keine allgemeingültigen Angaben gemacht werden können. Es ist Sache des Fachmannes hier eine optimale Lösung zu finden.

Die Kreiskranzbewegung ist nicht wie bei den eingangs erwähnten, bekannten Vorrichtungen durch Treibluft gestört, so dass eine optimale Durchmischung der Substanzen gewährleistet ist. Auch werden diese nicht durch Luftpolster vor der Wandung 12 gebremst, sondern prallen mit voller Wucht an der Wandung 12 auf. Dadurch werden die fertigen Granulate kompakter und weisen ein höheres Schüttgewicht auf. Die Stärke der auf die Substanzen einwirkenden Zentrifugalkräfte ist durch die gegebenenfalls stufenlos erfolgende Drehzahlsteuerung des Rotorantriebes 8 einstellbar.

Die Mitnehmereigenschaften der Rotorscheibe 15 können noch dadurch beeinflusst werden, dass sie oben mit einem Belag, beispielsweise aus Teflon, versehen wird, dass Vertiefungen oder erhabene Strukturen geeigneter Form und Grösse vorgesehen werden, dass die Oberfläche aufgerauht wird, oder dass andere dem Fachmann vertraute Massnahmen ergriffen werden.

Bei klebrigen Substanzen können am Rand der Rotorscheibe 15 Mitnehmer oder Schaber vorgesehen werden, die bei der Drehbewegung der Rotorscheibe 15, an der Wandung 12 anklebende Substanzen entfernen und in die Kreiskranzbewegung zurückbefördern. Als flankierende oder ergänzende Massnahme kann die Wandung 12 mit einer Schicht versehen sein, welche die Gefahr eines Anklebens von Substanzen verhindert. Hierzu eignet sich in vielen Fällen beispielsweise Teflon.

In der Figur 1 ist die Wandung 12 aus zwei Teilen 12a, 12b aufgebaut. Der untere Teil 12b reicht bis zur Höhe des oberen Randes der Rotorscheibe 15 und der obere Teil 12a ist so hoch gewählt, dass die grösstmögliche Höhe, welche die Granulate bei ihrer Kreiskranzbewegung erreichen können, etwas überragt wird. Der obere Teil ist nun vertikal verstellbar. Damit kann zwischen dem unteren und dem oberen Teil der Wandung ein Spalt 13 klaffen. Durch eine vertikale Verstellung des oberen Wandungsteiles (12a) kann die Spaltöffnung variiert werden. Durch diesen so gebildeten Spalt 13 wird ein Teil der Granulate in den Ringraum II befördert. Der zwischen der Gehäusewand 2 und der Wandung 12 befindliche Boden 16 ist mit Löchern versehen.

Durch den luftdurchlässigen Boden 16 kann durch den Zuluftkanal 9 Luft in den Bearbeitungsraum II geblasen werden. Diese dient in erster Linie zum Trocknen der Granulate. Hierbei kann die Luft die Granulate einzeln umströmen. Es kann zu keiner Ballungsbildung kommen, wie sie etwa bei den eingangs erwähnten bekannten Vorrichtungen entstehen kann, wenn die Kreiskranzbewegung durch Treibluft gestört wird. Falls der Spalt zwischen unterem Wandungsteil 12b und Rotorscheibe 15 sehr eng gewählt wird, ist es häufig empfehlenswert, den unteren Wandungsteil 12b mit einer reibungsmindernden Schicht, beispielsweise aus Teflon, zu versehen.

Durch den Luftstrom werden die Granulate zudem emporgewirbelt und gelangen zurück in den zentralen Raum I. Die Stärke des Luftstromes kann in weiten Grenzen variiert werden.

Ein Teil des Luftstromes gelangt auch in den Spalt zwischen der Rotorscheibe 15 und dem unteren Teil der Wandung 12. Dieser Spalt der klein genug ist, dass keine Granulate in den Sockelraum III gelangen, lässt genügend Luft hindurch, dass kein Granulatstaub in den Sockelraum (III) gelangen kann. Auf der anderen Seite ist der so in den zentralen Raum I gelangende Luftstrom zu gering, als dass er die Kreiskranzbewegung der Granulate stören könnte.

Im Ausführungsbeispiel ist der zentrale Raum I vom angrenzenden Raum II ringförmig umgeben. Beide Räume I, II liegen auf gleicher Höhe. Dies ist jedoch nicht zwingend. Durch den Spalt 13, der durchaus auch nur einen Teil der Wandung 12 beanspruchen kann, können austretende Granulate in einen höher oder tiefer gelegenen Bearbeitungsraum II geleitet werden. Dieser kann sehr gross sein und auf eine andere, ev. höhere Temperatur gebracht werden.

In eine ebenfalls figürlich nicht dargestellten Ausführungsvariante kann die Wand eines auf gleicher Höhe wie der zentrale Raum I liegenden und mit diesem über einen luftdurchlässigen Boden verbundenen Ringraumes II wenigstens teilweise horizontal verschiebbar sein, so dass das Volumen und damit die Trocknungsleistung des Ringraumes II beeinflusst werden kann. Um eine solche Verschiebung überhaupt zu ermöglichen, müssen entsprechende konstruktive Massnahmen vorgesehen werden. Die Bearbeitungsgehäusewand 2 kann beispielsweise als Faltwand ausgebildet sein und – wenigstens zeitweise – den luftdurchlässigen Boden 16 nur teilweise abdecken.

Mittels im zentralen Raum I vorgesehenen Sprühdüsen 11 können die Granulate auch gecoatet werden. Im zentralen Raum I werden weder Kreiskranzbewegung noch Sprühkegel gestört, so dass eine ausserordentlich gleichmässige Besprühung erreicht werden kann. Zudem sind die Sprühverluste äusserst gering. Im Ringraum II werden die Granulate laufend getrocknet und wieder für eine weitere Besprühung aufnahmefähig gemacht. Infolge der hohen Trocknungsleistungen ist nicht nur eine sehr kurze Trocknungszeit sondern auch eine hohe Sprührate erzielbar. Aus erwähnten Gründen kann nämlich die Stärke des Luftstromes in weiten Grenzen geregelt und damit der Vorgang des Trocknens optimiert werden.

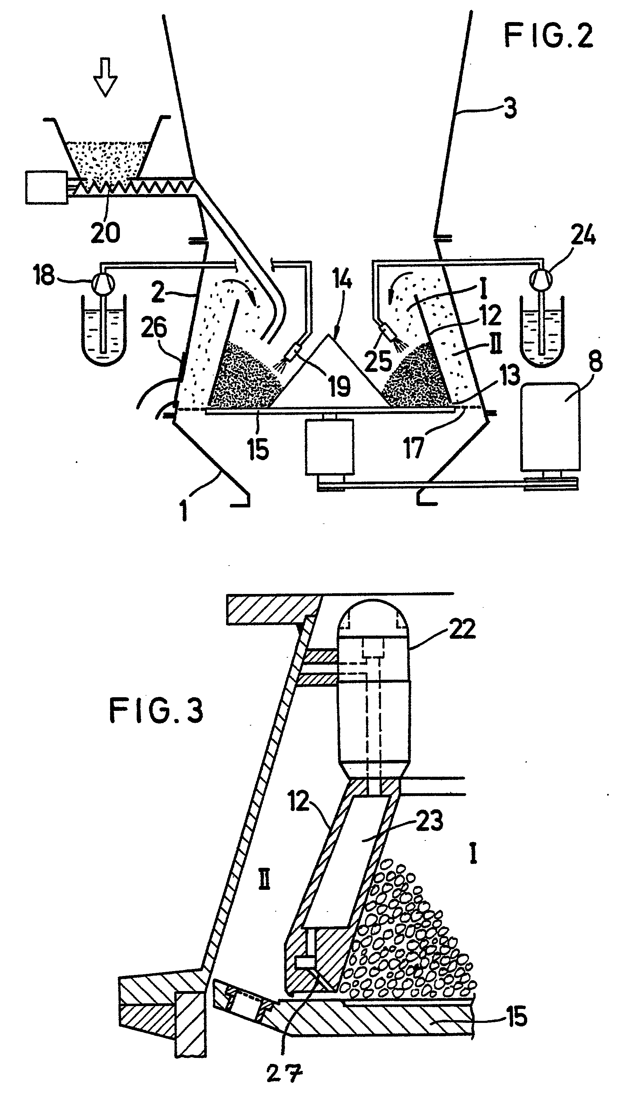

Das Gehäuse der in Fig. 2 gezeigten Ausführungsvariante besteht ebenfalls aus einem Sockel 1, einem Bearbeitungsgehäuse 2 und einem Filtergehäuse 3. Die der in Fig. 1 gezeigten Ausführungsvarianten entsprechenden Teile sind mit gleichen Hinweisziffern versehen und werden an dieser Stelle nicht ein weiteres Mal erläutert. Es wird auf den entsprechenden weiter oben stehenden Text der Beschreibung verwiesen.

In diesem Ausführungsbeispiel verjüngt sich die Wandung 12 – welche den zentralen Bearbeitungsraum I vom diesen ringförmig umgebenden, weiteren Bearbeitungsraum II abtrennt – konisch gegen oben, wodurch die Produkte so fallen, dass die Kreiskranzbewegung noch zusätzlich etwas unterstützt wird. Die Rotorscheibe 15, welche durch den Antrieb 8 in Drehbewegung versetzt wird, reicht bis zum Rand der Wandung 2 des Bearbeitungsgehäuses. Sie reicht also bis zum weiteren Bearbeitungsraum II.

Im Unterschied zur in Fig. 1 gezeigten Ausführungsvariante ist die Wandung 12 und/oder die Rotorscheibe 15 in ihrer Höhe verstellbar, wobei die entsprechende(n) Verstelleinrichtung(en) jedoch in der Zeichnung nicht dargestellt ist bzw. sind. Somit kann zwischen durch Verstellung der letzteren nach unten in vertikaler Richtung ein Ringspalt 13 geöffnet werden. Der in den weiteren Bearbeitungsraum II hineinragende Aussenteil 17 der Rotorscheibe 15 ist luftdurchlässig ausgebildet und ersetzt in diesem Ausführungsbeispiel den mit Löchern versehenen, zwischen Gehäusewand 2 und der Wandung 12 befindlichen Boden 16 gemäss Fig. 1. Der Aussenteil 17 kann als Sieb ausgebildet oder mit Löchern versehen sein. Die Löcher können auch wesentlich grösser als das zu bearbeitende Granulat gewählt werden. In diesem Fall sind sie mit einem Sieb zu versehen, damit nicht Granulat in den Sockelraum gelangen kann. Hierzu kann das Sieb beispielsweise aufvulkanisiert werden, so dass es in der Lochung festklemmbar ist.

Bei Aufbau von Granulaten ist der Ringspalt 13 zunächst noch geschlossen. Das eingefüllte Trockengut wird durch die Rotorscheibe 15 in die eingangs beschriebene Kreiskranzbewegung versetzt. Auf die in Bewegung befindliche Masse wird mittels einer Granulierpumpe 18 über eine Düse 19, die als Zweitstoffdüse ausgebildet sein kann, fein zerstäubte Granulierflüssigkeit aufgesprüht, wodurch sich Agglomerate bilden, welche sich sukzessive zu Granulaten formen. Gegebenenfalls ist vor der Besprühung mit Granulierflüssigkeit eine Befeuchtung erforderlich. Diese kann mittels einem gegebenenfalls separat aufgebauten Zerstäuber oder einer Dampfdüse erfolgen. Als Zerstäuber kommt beispielsweise ein Ultraschallzerstäuber in Frage. Erfordert der Prozess die Zuführung von pulverförmigen Substanzen, so kann dies mittels einer Dosiereinrichtung 20 erfolgen. Bei der Verwendung mehrerer, verschiedener pulverförmiger Substanzen ist es – um einer Entmischung vorzubeugen – in der Regel vorteilhaft, mehrere, getrennt aufgebaute Dosiereinrichtungen einzusetzen.

Schon mit einer geringen Absenkung der Rotorscheibe 15 gelangen Granulate in den weiteren Bearbeitungsraum II. Dort werden sie mittels eines gegebenenfalls erwärmten Luftstromes hochgewirbelt, angetrocknet und in den zentralen Bearbeitungsteil zurückbefördert. Der Luftstrom dient also nicht nur der Trocknung, sondern auch der pneumatischen Förderung der Granulate, erfüllt also zwei Funktionen. Auf diese Weise kann eine Verklebung der Granulate vermieden werden.

Die Förderbewegung kann konstruktiv noch dadurch unterstützt werden, dass der im weiteren Bearbeitungsraum II befindliche Teil der Rotorscheibe 15 gegen aussen nach oben gewinkelt ist. Die Fördermenge des Granulates kann durch Verstellen des Ringspaltes 13 beliebig eingestellt werden.

Die erfindungsgemässe Vorrichtung eignet sich auch für den Coating-Prozess. Hierzu wird mittels einer Pumpe 24 die entsprechende Flüssigkeit in einer Düse 25 fein zerstäubt und auf die in Kreiskranzbewegung versetzten Granulate aufgesprüht. Während der gesamten Dauer des Coating-Prozesses gelangt eine einstellbare Menge an Granulat durch den Ringspalt 13 in den weiteren Bearbeitungsraum II, in welchem die Granulate getrocknet und laufend wieder in den zentralen Bearbeitungsraum I zurückbefördert werden.

Zum Austrag des Fertigproduktes wird Trocken-/Förderluft abgestellt und der Ringspalt 13 sowie ein im Bearbeitungsgehäuse 2 hierzu vorgesehener Schieber 26 geöffnet, so dass die Granulate bei drehender Rotorscheibe 15 in einen Austragkanal befördert werden.

Nicht ganz unproblematisch ist die Abdichtung bei geschlossenem Ringspalt 13. Es ist äusserst schwierig im Handel eine dynamische Dichtung, d.h. eine zuverlässige Dichtung für eine fest montierte Wandung gegenüber einer sich drehenden Rotorscheibe zu finden. Ohne Dichtung oder sonstige Gegenmassnahme aber gelangen Trockensubstanz und/oder Granulate in den verbleibenden Ringspalt 13.

Eine nützliche Lösung dieses Problems ist in Fig. 3 gezeigt. Hier ist am unteren Rand der Wandung 12 ein Ringschlitz 21 vorgesehen. Wie die Figur zeigt, ist er vorzugsweise nicht senkrecht, sondern in einem vorgegebenen Winkel gegen die Rotorscheibe 15 gerichtet. In der Wandung 12 ist ein Luftkanalsystem 13 angeordnet, welches mit einem Gebläse 22 verbunden ist. Als Luftkanalsystem 23 dient im in Fig. 3 gezeigten Ausführungsbeispiel der von der Doppelwandung 12 gebildete Zwischenraum.

Der aus dem Ringschlitz 21 strömende Luftvorhang wirkt den gegen den Ringspalt 13 vordringenden Produktteilen entgegen. Der Luftstrom ist so einzustellen, dass zuvor ein Vordringen von Produktteilen in den Ringspalt vermieden, eine Beeinflussung der Kreiskranzbewegung jedoch vermieden wird.

Zum Schluss sei noch – teilweise in Form einer Zusammenfassung – auf einige der vielen Einsatzmöglichkeiten einer erfindungsgemässen Vorrichtung hingewiesen:

a) Es können Granulate aufgebaut werden, indem die Ausgangssubstanz in Pulverform in den zentralen Bearbeitungsraum (I) eingegeben wird. Während der Kreiskranzbewegung der Pulverteile wird solange besprüht, bis sich Granulate aufgebaut haben. Gegebenenfalls sind Initialkörnchen beizugeben. Der Aufbau erfolgt bei geschlossenem Spalt 13. Anschliessend kann der Spalt geöffnet und die fertigen Granulate im Ringraum getrocknet werden.

b) Im zentralen Bearbeitungsraum I können auch Extrudate oder beliebig geformte Granulate zu kreisförmigen Granulaten ausgeformt werden. Gegebenenfalls muss noch besprüht werden, sei es, um eine Austrocknung der Granulate zu verhindern oder sei es, um die Ausgangssubstanzen überhaupt erst formbar zu machen. Diesen Vorgang lässt man am besten auch bei geschlossenem Spalt 13 ablaufen. Dieser wird dann für die gegebenenfalls erforderliche, anschliessende Trocknung im weiteren Bearbeitungsraum II wieder geöffnet.

c) Auch für das Coaten ist die erfindungsgemässe Vorrichtung bestens geeignet. Die aufgesprühte Wirksubstanz kann im Ringraum II laufend abgetrocknet werden. Da die Trocknungsleistung in weiten Grenzen variiert werden kann, ist eine hohe Sprührate und ein speditiver Arbeitsablauf gewährleistet.

Im Gegensatz zu den bekannten Vorrichtungen können Arbeitsprozesse örtlich aufgeteilt, und somit einzeln geregelt werden, ohne dass sich die Bearbeitungsschritte gegenseitig stören. Die Sprühzone kommt mit dem Luftstrom nicht in Berührung, und die Kreiskranzbewegung bleibt weitgehend unbeeinflusst. Deshalb kann mit grossen Luftströmen gearbeitet werden.

Die Agglomerier- und Coating-Flüssigkeit kann sehr schnell aufgesprüht und durch eine grosse Wärmeaustauschfläche rasch getrocknet werden. Demzufolge wird die Prozessdauer im Vergleich zu den bekannten Verfahren ganz erheblich verkürzt.

Die dem Warmluftstrom zugeführte Produktmenge kann durch Verstellen des Ringspaltes je nach Bedarf genau reguliert werden. Ein Zusammenkleben von Granulaten wird dank der pneumatischen Förderweise verhindert.

**Patentansprüche**

1. Vorrichtung zur Herstellung und/oder zur Bearbeitung von Granulaten mit einer im wesentlichen horizontal ausgerichteten, auf einer vertikalen Antriebsachse drehbar gelagerten Rotorscheibe, mit einem über der Rotorscheibe befindlichen, von einer Wandung umgebenen Bearbeitungsraum, wobei zwischen der Wandung und der Rotorscheibe wenigstens teilweise ein verstellbarer, ringförmiger Spalt geöffnet werden kann, dadurch gekennzeichnet, dass der Spalt (13) den von der Wandung (12) umschlossenen erstgenannten Bearbeitungsraum (I) mit einem weiteren Bearbeitungsraum (II) direkt oder über einen Förderkanal verbindet, so dass auf der Rotorscheibe (15) liegende Granulate bei deren Umdrehung infolge der einwirkenden Zentrifugalkräfte durch den ringförmigen Spalt (13) aus dem erstgenannten Bearbeitungsraum (I) getrieben und in den weiteren Bearbeitungsraum (II) geleitet werden.

2. Vorrichtung nach Anspruch 1, dadurch gekennzeichnet, dass der weitere Bearbeitungsraum (II) mit seiner Gehäusewand (2) den erstgenannten Bearbeitungsraum (I) wenigstens teilweise ringförmig umgibt und unten mit einem luftdurchlässigen Boden (16) versehen ist, und dass Mittel vorhanden sind, mittels welchen im weiteren Bearbeitungsraum (II) ein Druckgefälle erzeugbar ist, so dass dieser von Luft durchströmt werden kann.

3. Vorrichtung nach einem der Ansprüche 1 oder 2, dadurch gekennzeichnet, dass zwischen dem erstgenannten Bearbeitungsraum (I) und dem diesen wenigstens teilweise umgebenden weiteren Bearbeitungsraum (II) über dem oberen Rand der den erstgenannten Bearbeitungsraum (I) umgebenden Wandung (12) eine Verbindung besteht, so dass mittels eines Gebläses Granulat vom weiteren Bearbeitungsraum (II) in den erstgenannten Bearbeitungsraum (I) getrieben werden kann.

4. Vorrichtung nach einem der Ansprüche 1 bis 3, dadurch gekennzeichnet, dass die Wandung (12) aus einem fest montierten, bis zum oberen Rand der innerhalb der Wandung (12) angeordneten Rotorscheibe (15) reichenden unteren Teil (12b) und einem – zwecks Öffnung eines Ringspaltes (13) – vertikal verstellbaren oberen Teil (12a) aufgebaut ist.

5. Vorrichtung nach einem der Ansprüche 1 bis 3, dadurch gekennzeichnet, dass die Rotorscheibe (15) bis in den weiteren Bearbeitungsraum (II) reicht und im Bereiche des weiteren Bearbeitungsraumes (II) mit einer Lochung versehen und/oder als Sieb ausgebildet ist.

6. Vorrichtung nach Anspruch 5, dadurch gekennzeichnet, dass die Rotorscheibe (15) zwecks Öffnung des Ringspaltes (13) höhenverstellbar ist.

7. Vorrichtung nach Anspruch 6, dadurch gekennzeichnet, dass die den erstgenannten Arbeitsraum (I) umgebende Wandung (12) in ihrem gegen die Rotorscheibe (15) gerichteten Rand mit einem Ringschlitz (21) versehen ist, der zur Erzeugung eines Luftvorhangs über ein in der Wandung (12) vorgesehenes Luftkanalsystem (23) mit einem Gebläse (22) verbunden ist und dass die Öffnung des in der Wandung befindlichen Ringspaltes (21) in einem gegen die Drehachse gerichteten Winkel auf die Rotorscheibe (15) gerichtet ist.

8. Vorrichtung nach einem der Ansprüche 5 bis 7, dadurch gekennzeichnet, dass die Rotorscheibe (15) im Bereiche des weiteren Bearbeitungsraumes (II) nach oben abgewinkelt ist.

9. Vorrichtung nach einem der Ansprüche 1 bis 8, dadurch gekennzeichnet, dass der erstgenannte Bearbeitungsraum (I) mit wenigstens einer Sprühdüse (11) versehen ist.

10. Vorrichtung nach einem der Ansprüche 1 bis 9, dadurch gekennzeichnet, dass der erstgenannte Beschichtungsraum (I) mit wenigstens einer Pulverdosiervorrichtung (20) versehen ist.

**Claims**

1. Apparatus for producing and/or processing granules, having a rotor disc which is substantially horizontally aligned and rotatably mounted on a vertical drive spindle, with a processing chamber situated above the rotor disc and enclosed by a wall, whilst between the wall and the rotor disc at least in part an adjustable annular slot can be opened, characterised in that the slot (13) connects the abovementioned processing chamber (I) surrounded by the wall (12) to a further processing chamber (II) either directly or via a feed channel, so that granules lying on the rotor disc (15) are propelled through the annular slot (13) from the first mentioned processing chamber (I) and directed into the further processing chamber (II) as the rotor disc (15) rotates as a result of the centrifugal forces acting thereon.

2. Apparatus according to claim 1, characterised in that the further processing chamber (II) at least in part annularly surrounds the first mentioned chamber (I) by means of its housing wall (2) and is provided at the bottom with an air-permeable base (16), and means are provided for producing a pressure gradient in the further processing chamber (II) so that air can flow through this chamber.

3. Apparatus according to one of claims 1 or 2, characterised in that between the first mentioned processing chamber (I) and the further processing chamber (II) which at least in part surrounds the first, above the upper edge of the wall (12) enclosing the first mentioned processing chamber (I), there is a connection so that granules can be propelled by means of a blower from the further processing chamber (II) into the first mentioned processing chamber (I).

4. Apparatus according to one of claims 1 to 3, characterised in that the wall (12) is made up of a fixedly mounted lower part (12b) extending up to the upper edge of the rotor disc (15) arranged within the wall (12) and – for the purpose of opening up an annular slot 13 – an upper part (12a) which is vertically adjustable.

5. Apparatus according to one of claims 1 to 3, characterised in that the rotor disc (15) extends into the further processing chamber (II) and in the region of the further processing chamber (II) is provided with perforations and/or constructed as a screen.

6. Process according to claim 5, characterised in that the rotor disc (15) is vertically adjustable for the purpose of opening the annular slot (13).

7. Apparatus according to claim 6, characterised in that the wall (12) surrounding the first mentioned processing chamber (I) is provided, in its edge directed towards the rotor disc (15), with an annular slot (21) which is connected by means of an air channel system (23) provided in the wall (12) to a blower (22) for the purpose of producing an air curtain, and in that the opening of the annular slot (21) provided in the wall is directed towards the rotor disc (15) at an angle directed towards the rotary spindle.

8. Apparatus according to one of claims 5 to 7, characterised in that the rotor disc (15) is bent upwards in the region of the further processing chamber (II).

9. Apparatus according to one of claims 1 to 8, characterised in that the first mentioned processing chamber (I) is provided with at least one spray nozzle (11).

10. Apparatus according to one of claims 1 to 9, characterised in that the first mentioned coating chamber (I) is provided with at least one powder metering apparatus (20).

## Revendications

1. Appareil pour la production et/ou pour le traitement de granules, comportant un disque de rotor orienté en substance horizontalement et monté à rotation sur un axe d'entraînement vertical, un espace de traitement entouré par une paroi et se trouvant audessus du disque de rotor, un interstice annulaire réglable pouvant être ouvert au moins partiellement entre la paroi et le disque de rotor, caractérisé en ce que l'interstice (13) raccorde l'espace de traitement (I) entouré par la paroi (12) cité en premier lieu à un autre espace de traitement (II), directement ou par l'intermédiaire d'un canal de transfert, de sorte que des granules se trouvant sur le disque de rotor (15), en roulant sous l'effet des forces centrifuges, sont refoulés par l'interstice annulaire (13) hors de l'espace de traitement (I) cité en premier lieu et amenés dans l'autre espace de traitement (II).

2. Appareil suivant la revendication 1, caractérisé en ce que l'autre espace de traitement (II) entoure au moins partiellement de manière annulaire, par sa paroi d'enveloppe (II), l'espace de traitement (I) cité en premier lieu et est pourvu, à sa partie inférieure, d'un fond perméable à l'air (16), et que des moyens sont prévus pour produire une chute de pression dans l'autre espace de traitement (II), de sorte que cet espace peut être balayé par de l'air.

3. Appareil suivant la revendication 1 ou 2, caractérisé en ce qu'entre l'espace de traitement (I) cité en premier lieu et l'autre espace de traitement (II) qui l'entoure au moins partiellement existe une liaison par-dessus le bord supérieur de la paroi (12) entourant l'espace de traitement (I) cité en premier lieu, de sorte que des granules peuvent être entraînés au moyen d'une soufflante dans l'espace de traitement (I) cité en premier lieu à partir de l'autre espace de traitement (II).

4. Appareil suivant l'une quelconque des revendications 1 à 3, caractérisé en ce que la paroi (12) est formée d'une partie inférieure (12b) montée fixe et s'étendant jusqu'au bord supérieur du disque de rotor (15) disposé à l'intérieur de la paroi (12) et d'une partie supérieure (12a) réglable verticalement en vue de l'ouverture d'un interstice annulaire (13).

5. Appareil suivant l'une quelconque des revendications 1 à 3, caractérisé en ce que le disque de rotor (15) s'étend jusque dans l'autre espace de traitement (II) et est pourvu de perforations et/ou a la forme d'un crible dans la zone de cet autre espace de traitement (II).

6. Appareil suivant la revendication 5, caractérisé en ce que le disque de rotor (15) est réglable en hauteur en vue de l'ouverture de l'interstice annulaire (13).

7. Appareil suivant la revendication 6, caractérisé en ce que, dans son bord dirigé vers le disque de rotor (15), la paroi (12) entourant l'espace de travail (I) cité en premier lieu est pourvue d'une fente annulaire (21), qui est raccordée à une soufflante (22) par l'intermédiaire d'un système de canaux (23) prévu dans la paroi (12), pour produire un rideau d'air et que l'orifice de la fente annulaire (21) ménagée dans la paroi est dirigé sous un certain angle orienté vers l'axe de rotation, vers le disque de rotor (15).

8. Appareil suivant l'une quelconque des revendication 5 à 7, caractérisé en ce que le disque de rotor (15) est coudé vers le haut dans la zone de l'autre espace de traitement (II).

9. Appareil suivant l'une quelconque des revendications 1 à 8, caractérisé en ce que l'espace de traitement (I) cité en premier lieu est pourvu d'au moins un ajutage de pulvérisation (11).

10. Appareil suivant l'une quelconque des revendications 1 à 9, caractérisé en ce que l'espace d'enrobage (I) cité en premier lieu est pourvu d'au moins un dispositif doseur de poudre (20).

FIG.1

EP 0 228 633 B1

# FIG.2

# FIG.3